# EUROPEAN PATENT APPLICATION

(11) **EP 4 407 356 A1**
(43) Date of publication of application: **31.07.2024**
(21) Application number: 23219538.8
(22) Date of filing: 21.12.2023
(51) Int. Cl.: G02B 6/38, G02B 6/42, H04B 10/079

(54) **SELF-REPORTING OPTICAL CONNECTOR DEVICE**

(30) Priority: 30.01.2023 US 202318103447
(71) Applicant: Nokia Solutions and Networks Oy, 02610 Espoo (FI)
(72) Inventor: Dion, Gino, Quispamsis, E2G0E6 (CA); Boutilier, Steve, Lower Sackville, B4C 2W7 (CA); Mcaloney, Chris, Halifax, B3K 4L9 (CA); Mackenzie, Colin, Florida, 33773 (US)
(74) Representative: Bryers Intellectual Property Ltd

(57) **Abstract**

Various example embodiments of a self-reporting optical connector device are presented herein. The self-reporting optical connector device may be configured to provide optical connectivity between optical fibers for supporting propagation of optical signals between the optical fibers. The self-reporting optical connector device may be deployed at a customer premises for supporting optical connectivity between an optical fiber originating in an optical communication network and terminating at the customer premises and an optical fiber deployed within the customer premises between the self-reporting optical connector device and an optical termination device at the customer premises. The self-reporting optical connector device may be configured to support self-reporting of an optical fiber status of the optical fiber originating in the optical communication network and terminating at the self-reporting optical connector device in the customer premises.

## Description

### TECHNICAL FIELD

Various example embodiments relate generally to communication systems and, more particularly but not exclusively, to optical connector devices deployed in communication systems.

### BACKGROUND

In communication networks, various communications technologies may be used to support various types of communications.

### SUMMARY

In at least some example embodiments, an apparatus is provided. The apparatus includes a first fiber receptacle configured to receive a first connector of a first optical fiber. The apparatus includes a photodetector configured to detect optical signals. The apparatus includes a second fiber receptacle. The apparatus includes a receptacle cover configured to cover the second fiber receptacle. The receptacle cover is configured to support an open state in which the second fiber receptacle is configured to receive a second connector of a second optical fiber for transferring optical signals between the first optical fiber and the second optical fiber. The receptacle cover is configured to support a closed state in which optical signals received over the first optical fiber are redirected toward the photodetector. The apparatus includes a controller configured to determine, based on whether an optical signal is detected by the photodetector, a status of the first optical fiber and provide an indication of the status of the first optical fiber. The inside surface of the receptacle cover may include a reflective element for redirecting the optical signals received over the first optical fiber toward the photodetector. The reflective element may be a mirror. The photodetector may be configured to detect optical signals in a range of wavelengths configured to support a fiber-to-the-home service. The photodetector may be integrated with the controller. The controller may be a microcontroller. The controller may be configured to determine the status of the optical fiber and provide the indication of the status of the optical fiber periodically. The controller may be configured to provide the indication of the status of the first optical fiber by initiating activation of a visual indicator. The controller may be configured to provide the indication of the status of the first optical fiber by initiating sending of a message toward a remote device. The message may be sent wirelessly. The message may be sent using a cellular device. The message may be sent using at least one of a cellular transmission, a WiFi transmission, or a Bluetooth transmission. The apparatus may further include a wireless chip configured to support wireless communication of the indication of the status of the first optical fiber. The apparatus may further includes a battery configured to power at least the controller. The controller may be configured to determine a status of the battery and provide an indication of the status of the battery. The controller may be configured provide the indication of the status of the battery by initiating activation of a visual indicator. The controller may be configured to provide the indication of the status of the battery by initiating sending of a message toward a remote device. The first optical fiber may be part of a passive optical network, and the second optical fiber may be a fiber located at a customer premises.

In at least some example embodiments, an apparatus is provided. The apparatus includes a fiber receptacle having a receptacle cover, a photodetector configured to detect optical signals, and a controller. The receptacle cover is configured to redirect optical signals received over an optical fiber to the photodetector. The controller is configured to provide an indication of a status of the optical fiber based on whether an optical signal is detected by the photodetector. The receptacle cover may be configured to support an open state in which the fiber receptacle is configured to receive a second optical fiber for transferring optical signals between the optical fiber and the second optical fiber. The receptacle cover may be configured to support a closed state in which the optical signals received over the optical fiber are redirected toward the photodetector. The inside surface of the receptacle cover may include a reflective element for redirecting the optical signals received over the optical fiber toward the photodetector. The reflective element may be a mirror. The photodetector may be configured to detect optical signals in a range of wavelengths configured to support a fiber-to-the-home service. The photodetector may be integrated with the controller. The controller may be a microcontroller. The controller may be configured to determine the status of the optical fiber and provide the indication of the status of the optical fiber periodically. The controller may be configured to provide the indication of the status of the first optical fiber by initiating activation of a visual indicator. The controller may be configured to provide the indication of the status of the optical fiber by initiating sending of a message toward a remote device. The message may be sent wirelessly. The message may be sent using a cellular device. The message may be sent using at least one of a cellular transmission, a WiFi transmission, or a Bluetooth transmission. The apparatus may further include a wireless chip configured to support wireless communication of the indication of the status of the optical fiber. The apparatus may further includes a battery configured to power at least the controller. The controller may be configured to determine a status of the battery and provide an indication of the status of the battery. The controller may be configured provide the indication of the status of the battery by initiating activation of a visual indicator. The controller may be configured to provide the indication of the status of the battery by initiating sending of a message toward a remote device. The optical fiber may be part of a passive optical network, and the second optical fiber may be a fiber located at a customer premises.

In at least some example embodiments, an apparatus includes at least one processor and at least one memory storing instructions that, when executed by the at least one processor, cause the apparatus at least to determine, by a controller of an optical connector based on whether an optical signal is detected by a photodetector of the optical connector, a status of an optical fiber connected to the optical connector and provide, by the controller of the optical connector, an indication of the status of the optical fiber connected to the optical connector. In at least some example embodiments, a non-transitory computer readable medium includes computer program instructions that, when executed by an apparatus, cause the apparatus at least to determine, by a controller of an optical connector based on whether an optical signal is detected by a photodetector of the optical connector, a status of an optical fiber connected to the optical connector and provide, by the controller of the optical connector, an indication of the status of the optical fiber connected to the optical connector. In at least some example embodiments, a method includes determining, by a controller of an optical connector based on whether an optical signal is detected by a photodetector of the optical connector, a status of an optical fiber connected to the optical connector and providing, by the controller of the optical connector, an indication of the status of the optical fiber connected to the optical connector. In at least some example embodiments, an apparatus includes means for determining, by a controller of an optical connector based on whether an optical signal is detected by a photodetector of the optical connector, a status of an optical fiber connected to the optical connector and means for providing, by the controller of the optical connector, an indication of the status of the optical fiber connected to the optical connector.

### BRIEF DESCRIPTION OF THE DRAWINGS

The teachings herein can be readily understood by considering the following detailed description in conjunction with the accompanying drawings, in which:
FIG. 1 depicts an example embodiment of a communication system including a self-reporting optical connector device configured to support self-reporting of an optical fiber status of an optical fiber connected to the self-reporting optical connector device;
FIGs. 2A and 2B depict example embodiments of a self-reporting optical connector device, configured to support self-reporting of an optical fiber status of an optical fiber connected to the self-reporting optical connector device, where a receptacle cover of the self-reporting optical connector device is in an open state and a closed state, respectively;
FIGs. 3A and 3B depict an example embodiment of a self-reporting optical connector device for illustrating two views of the self-reporting optical connector device when a receptacle cover of the self-reporting optical connector device is in a closed state for supporting self-reporting of an optical fiber status of an optical fiber connected to the self-reporting optical connector device;
FIG. 4 depicts an example embodiment of a method for operating a self-reporting optical connector device for supporting self-reporting of an optical fiber status of an optical fiber connected to the self-reporting optical connector device; and
FIG. 5 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments of a self-reporting optical connector device are presented herein. The self-reporting optical connector device may be configured to provide optical connectivity between optical fibers for supporting propagation of optical signals between the optical fibers. The self-reporting optical connector device may be deployed at a customer premises (e.g., at a home in a fiber-to-the-home (FTTH) arrangement or other type of customer premises that may have an optical connector device) for supporting optical connectivity between an optical fiber originating in an optical communication network and terminating at the customer premises and an optical fiber deployed within the customer premises between the self-reporting optical connector device and an optical termination device at the customer premises. The self-reporting optical connector device may be configured to support self-reporting of an optical fiber status of the optical fiber originating in the optical communication network and terminating at the self-reporting optical connector device in the customer premises. The self-reporting optical connector device may be configured to support self-reporting of the optical fiber status of the optical fiber terminating at the self-reporting optical connector device where the optical fiber status of the optical fiber terminating at the self-reporting optical connector device is indicative as to whether the optical fiber terminating at the self-reporting receptacle device is inactive (e.g., an optical signal is not detected within the optical fiber) or active (e.g., an optical signal is detected within the optical fiber).

Various example embodiments of the self-reporting optical connector device may be configured to support various capabilities and functions for supporting self-reporting of the optical fiber status of the optical fiber terminating at the self-reporting optical connector device. For example, the self-reporting optical connector device may be implemented as an active self-reporting optical connector device configured to actively monitor and report (e.g., locally and/or remotely) the optical fiber status of the optical fiber terminating at the self-reporting optical connector device. For example, the self-reporting optical connector device may be implemented as an intelligent self-reporting optical connector device that is capable of various types of intelligence within the context of (e.g., intelligently determining when to perform optical fiber status checks, intelligently determining where to report the results of optical fiber status checks, or the like, as well as various combinations thereof). For example, the self-reporting optical connector device may be configured to operate as an Internet-of-Things (IoT)-enabled or IoT-like device capable of autonomously monitoring and reporting the optical fiber status of the optical fiber terminating at the self-reporting optical connector device. The self-reporting optical connector device may be configured to support various other capabilities and functions for supporting self-reporting of the optical fiber status of the optical fiber terminating at the self-reporting optical connector device.

Various example embodiments of the self-reporting optical connector device may be configured to facilitate a customer self-install procedure by a customer at the customer premises where the self-reporting optical connector device is deployed. Many service providers that support FTTH struggle with the issue that, on many occasions, the self-install process (completed by the end-user at the home) is foiled due to a fiber connectivity issue at or in the home, even when the house had been pre-qualified by the service provider as being "on-net" (i.e., where the fiber service is connected and active). This is often due to fiber cuts (at and/or inside the home), disconnects of the fiber (often by competitors during service swap-overs between service providers), damaged receptacles, and so forth. In those situations the end-user cannot proceed with the install and must report back to the service provider to schedule the dispatch of a technician to address the problem and complete the install, which many times can take days or even weeks. Service providers often refer to this situation as a "cold house" problem. Various example embodiments of the self-reporting optical connector device may be configured to eliminate such situations in which an unknown optical fiber disruption in or at the customer premises would cause failure of a self-install by the customer, thereby eliminating the "cold house" problem.

It will be appreciated that these and various other example embodiments of a self-reporting optical connector device, and advantages or potential advantages of example embodiments of a self-reporting optical connector device, may be further understood by way of reference to the various figures, which are discussed further below.

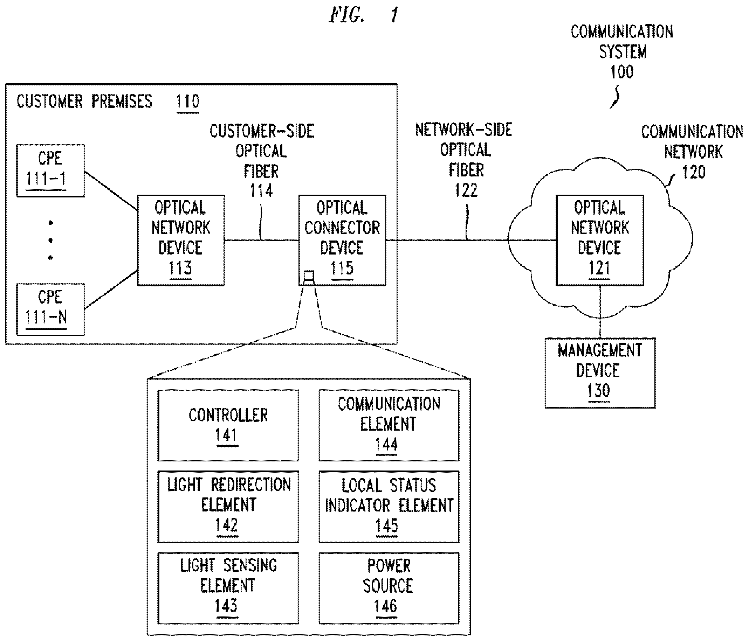

FIG. 1 depicts an example embodiment of a communication system including a self-reporting optical connector device configured to support self-reporting of an optical fiber status of an optical fiber connected to the self-reporting optical connector device.

The communication system 100 includes communication equipment at a customer premises 110, a communication network 120 configured to support communications of customer devices at the customer premises 110, and a management device 130 configured to support management functions for the communication network 120 and the communication equipment at the customer premises 110. It will be appreciated that the communication system 100 may include various other communication elements, which have been omitted for purposes of clarity in describing the operation of the communication system 100 of FIG. 1.

The customer premises 110 includes a set of customer premises equipments 111-1 to 111-N (collectively, customer premises equipments 111), an optical network device 113, and an optical connector device 115. The customer premises equipments 111 may include customer end devices (e.g., a smartphone, a laptop computer, a desktop computer, a set top box, a smart television, gaming system, a home control device, an Internet-of-Things (IoT) device, or the like), customer networking devices (e.g., a wireless router, a switch, or the like) which may support communications of customer end devices, or the like, as well as various combinations thereof. The customer premises equipments 111-1 to 111-N are connected to the optical network device 113 via a set of connections 112-1 to 112-N (collectively, connections 112), respectively. The connections 112 between the customer premises equipments 111 and the optical network device 113 may include wired connections, wireless connections, or the like, as well as various combinations thereof. The optical network device 113 is connected to the optical connector device 115 via a customer-side optical fiber 114. The optical connector device 115 is configured to provide an optical interface between the customer premises 110 and the communication network 120.

The communication network 120 may be configured to support communications of the customer premises 110 (e.g., communications of the customer premises equipments 111 of the customer premises 110). The communication network 120 may be configured to support communications based on optical communications technologies, such as based on passive optical networks (PONs), active optical networks, or the like, as well as various combinations thereof. For example, the communication network 120 may be configured to operate as a gigabit-capable PON (GPON), an XGS-PON, a 25G-PON, a next-generation PON (NG-PON), or the like. The communication network 120 includes an optical network device 121 configured to interface with the customer premises 110 via a network-side optical fiber 122 (illustratively, the network-side optical fiber 122 optically connects the optical network device 121 of the communication network 120 and the optical connector device 115 at the customer premises 110). For example, the optical network device 121 may be an optical line terminal (OLT), in which case the optical network device 113 at the customer premises 110 may be an optical network unit (ONU). It will be appreciated that the communication network 120 may include various other elements which may be used to support communications of the customer premises 110.

The optical connector device 115 may be configured to optically connect the network-side optical fiber 122 and the customer-side optical fiber 114 for supporting propagation of optical signals therebetween. However, there may be situations in which there are problems with optical connectivity between the network-side optical fiber 122 and the customer-side optical fiber 114. For example, this may be due to things such as fiber cuts of the network-side optical fiber 122 (at and/or inside the home), disconnects of the network-side optical fiber 122 (often by competitors during service swap-overs between service providers), damaged receptacles, and so forth. In this case, the self-install process (completed by the end-user at the home) in which the customer connects the customer-side optical fiber 114 to the optical connector device 115 is foiled due to a fiber connectivity issue at or in the customer premises 110, even when the customer premises 110 has been pre-qualified by the service provider as being "on-net" (i.e., where the fiber service from the optical network device 121 to the customer premises 110 via the network-side optical fiber 122 is connected and active).

The optical connector device 115 may be configured to support self-reporting of the optical fiber status of the network-side optical fiber 122, which may overcome various issues discussed above. The optical connector device 115 may be configured to support self-reporting of the optical fiber status of the network-side optical fiber 122 by monitoring the network-side optical fiber 122 for determining whether optical signals are propagating over the network-side optical fiber 122, determining an optical fiber status of the network-side optical fiber 122 based on whether optical signals are propagating over the network-side optical fiber 122, and initiating reporting of the optical fiber status of the network-side optical fiber 122 locally (e.g., via one or more local indications at the optical connector device 115) and/or remotely (e.g., via sending of one or more messages to one or more remote devices).

The optical connector device 115 may be configured to support self-reporting of the optical fiber status of the network-side optical fiber 122 based on the optical connector device 115 being in a particular state. The optical connector device 115 may be configured to support self-reporting of the optical fiber status of the network-side optical fiber 122 when the customer-side optical fiber 114 is not connected to the optical connector device 115. The optical connector device 115 may be configured such that, when the customer-side optical fiber 114 is not connected to the optical connector device 115, any optical signals that may be propagating in the network-side optical fiber 122 are redirected to a light sensor of the optical connector device 115 and a controller of the optical connector device 115 determines the optical fiber status of the network-side optical fiber 122 based on whether the light sensor indicates detection of optical signals propagating on the network-side optical fiber 122 and then initiates reporting of the optical fiber status of the network-side optical fiber 122 locally (e.g., via one or more local indications at the optical connector device 115) and/or remotely (e.g., via sending of one or more messages to one or more remote devices).

The optical connector device 115, as illustrated, may be configured to support self-reporting of the optical fiber status of the network-side optical fiber 122 using a controller 141, a light redirection element 142, a light sensing element 143, a communication element 144, a local status indicator element 145, and a power source 146. It will be appreciated that the optical connector device 115 may include fewer or more elements, including different types of elements, for supporting self-reporting of the optical fiber status of the network-side optical fiber 122 by the optical connector device 115.

The controller 141 may be configured to control self-reporting of the optical fiber status of the network-side optical fiber 122 by the optical connector device 115. The controller 141 may be configured to support determination of an optical fiber status of the network-side optical fiber 122 based on whether the light sensing element 143 detects optical signals from the network-side optical fiber 122. The controller 141 may be configured to determine that the network-side optical fiber 122 is active (optical fiber status = ACTIVE) based on a determination that the light sensing element 143 detects optical signals from the network-side optical fiber 122 or inactive (optical fiber status = INACTIVE) based on a determination that the light sensing element 143 does not detect optical signals from the network-side optical fiber 122. The controller 141 may be configured to control reporting of the optical fiber status of the network-side optical fiber 122 locally (e.g., activating local indications of the optical fiber status) and/or remotely (e.g., sending one or more messages including indications of the optical fiber status). The controller 141 may be configured to support various other functions for controlling self-reporting of the optical fiber status of the network-side optical fiber 122 by the optical connector device 115.

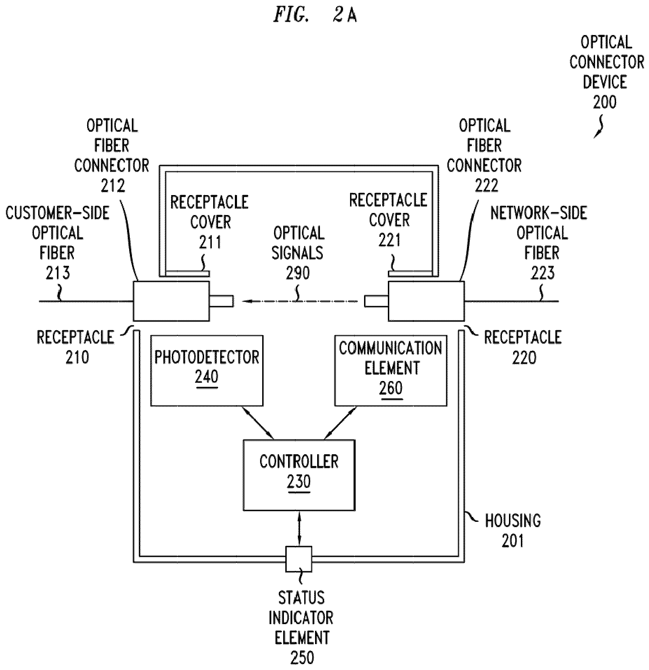

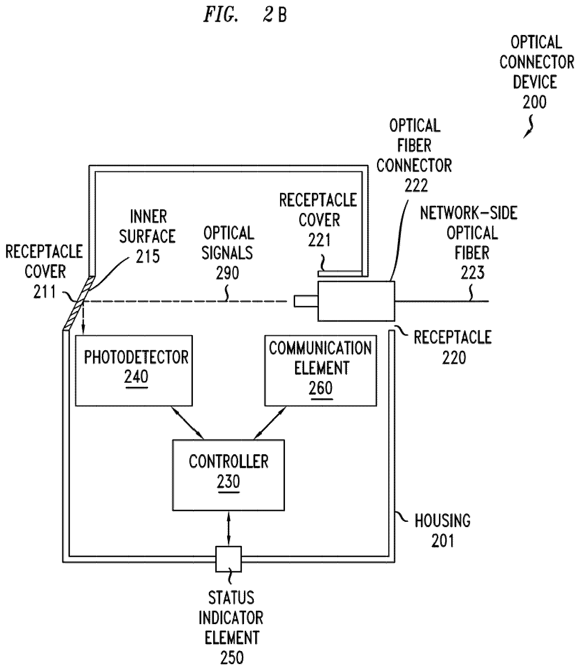

The light redirection element 142 is configured to redirect optical signals from the network-side optical fiber 122 to the light sensing element 143. The light redirection element 142 may be a reflective element (e.g., a mirror, a mirror-like reflective element or the like), a lens, or the like, as well as various combinations thereof. The light redirection element 142 may be arranged to redirect optical signals from the network-side optical fiber 122 to the light sensing element 143 when the optical connector device 115 is in a particular state. For example, the light redirection element 142 may be arranged within the optical signal path of the optical signals from the network-side optical fiber 122, when the customer-side optical fiber 114 is not connected to the optical connector device 115, so as to redirect optical signals from the network-side optical fiber 122 to the light sensing element 143. For example, the light redirection element 142 may be arranged outside of the optical signal path of the optical signals from the network-side optical fiber 122 when the customer-side optical fiber 114 is not connected to the optical connector device 115, thereby allowing the optical signals to pass between the network-side optical fiber 122 and the customer-side optical fiber 114. It will be appreciated that the arrangement of the light redirection element 142 relative to the optical signal path of the optical signals from the network-side optical fiber 122 may be further understood by way of reference to FIGs. 2A and 2B.

The light sensing element 143 may be configured to determine whether optical signals are received via the network-side optical fiber 122. The light sensing element 143 may be configured to be activated by the controller 141 to perform the detecting operation for determining whether optical signals are received via the network-side optical fiber 122. The light sensing element 143 may be tuned to support detection of optical signals at a wavelength(s) known to be used on the network-side optical fiber 122 (e.g., FTTH wavelengths in an FTTH arrangement). The light sensing element 143, when operating in a detecting mode for determining whether optical signals are received via the network-side optical fiber 122, may be configured to indicate to the controller 141 whether optical signals are received via the network-side optical fiber 122. The light sensing element 143 may be a photosensor, a photodetector, a photosensitive receptor, or the like. It will be appreciated that, although primarily presented as a standalone element, the light sensing element 143 may be integrated with the controller 141.

The communication element 144 may be configured to perform communication of the optical fiber status of the network-side optical fiber 122. The communication element 144 may be configured to perform communication of the optical fiber status of the network-side optical fiber 122 under the controller of the controller 141, such as where the controller 141 initiates sending of the optical fiber status of the network-side optical fiber 122 via the communication element 144. The communication element 144 may be a communication element configured to support communication of the optical fiber status of the network-side optical fiber 122 to a remote element (e.g., management device 130 and/or any other suitable element which may be interested in receiving the optical fiber status of the network-side optical fiber 122. The communication element 144 may be configured to support communication of the optical fiber status of the network-side optical fiber 122 to a remote element using cellular communications, WiFi communication, Bluetooth communications, or the like, as well as various combinations thereof. For example, the communication element 144 may be a cellular chip configured to support cellular communication, a WiFi chip configured to support WiFi communication, a Bluetooth chip configured to support Bluetooth communication, or the like. It will be appreciated that, although primarily presented as a standalone element, the communication element 144 may be integrated with the controller 141. It will be appreciated that the communication element 144 may be configured to support various other functions for supporting communication of the optical fiber status of the network-side optical fiber 122.

The local status indicator element 145 may be configured to provide an indication of the optical fiber status of the network-side optical fiber 122 locally at the optical connector device 115. The local status indicator element 145 may be configured to provide the indication of the optical fiber status of the network-side optical fiber 122 under the controller of the controller 141, such as where the controller 141 initiates presentation of the optical fiber status of the network-side optical fiber 122 via the local status indicator element 145. The local status indicator element 145 may be configured to provide an aural indication of the status (e.g., using different numbers of beeps to indicate different statuses, using different sequences of beeps to indicate different statuses, or the like). For example, the local status indicator element 145 may include a bell or other element configured to provide an aural indication (e.g., tones, ringing, or the like) of the optical fiber status of the network-side optical fiber 122 of the network-side optical fiber 122. The local status indicator element 145 may be configured to provide a visual indication of the status (e.g., using different numbers of flashes of a light to indicate status, using different colored lights to indicate different statuses, or the like). For example, the local status indicator element 145 may include a light emitting diode (LED) or other element configured to provide a visual indication of the optical fiber status of the network-side optical fiber 122 of the network-side optical fiber 122. The local status indicator element 145 may include a display element configured to display characters indicating different statuses. It will be appreciated that the local status indicator element 145 may be configured to provide various combinations of such indications within the context of self-reporting of the optical fiber status of the network-side optical fiber 122.

The power source 146 may be configured to provide power for operation of the optical connector device 115 to support self-reporting of the optical fiber status of the network-side optical fiber 122. The power source 146 may be a battery of other suitable power source. For example, the power source 146 may be a lithium-ion battery or other suitable type of battery. For example, the power source 146 may be a 2000mAh lithium-ion battery that would provide an estimated 7-10 years of battery life (based on reporting of the optical fiber status of the network-side optical fiber 122 once per week), before needing to be replaced. It will be appreciated that the reporting interval may be tailored to support more frequent reporting (which would be expected to result in a shorter battery life) or less frequent reporting (which would be expected to result in a longer battery life). The customer at the customer premises 110 may have access to the power source 146 (e.g., by removal of a faceplate on the optical connector device 115) in order to replace the power source and manage end-of-life. It will be appreciated that the power source 146 may be implemented in various other ways to provide power for operation of the optical connector device 115 to support self-reporting of the optical fiber status of the network-side optical fiber 122. It will be appreciated that the local status indicator element 145, although primarily presented as being used to indicate the optical fiber status of the network-side optical fiber 122, also may be used to provide indications of the status of the power source 146 (e.g., battery level okay indications, battery level low indications, or the like).

It will be appreciated that the optical connector device 115 may be implemented in various ways, which may include various implementations of the various elements of the optical connector device 115. In at least some example embodiments, for example, the optical connector device 115 may be equipped with an intelligent microcontroller equipped with a finely-tuned photosensitive receptor and GSM cellular chip (e.g., an ESP32 microcontroller equipped with a photosensitive receptor tuned to the specific wavelengths used in FTTH arrangements for supporting determination of optical fiber status and also equipped with a SIM800L chip for cellular communication of the optical fiber status). It will be appreciated that the optical connector device 115 may be implemented in various other ways, which may include various other implementations of the various elements of the optical connector device 115.

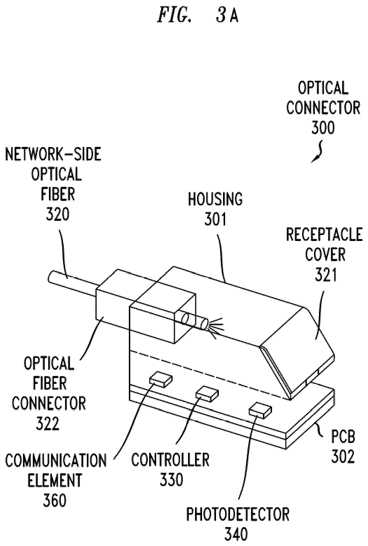

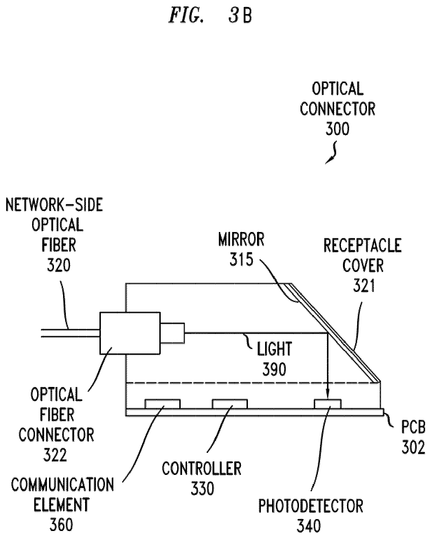

It will be appreciated that the configuration and operation of the optical connector device 115 in supporting self-reporting of optical fiber status may be further understood by way of reference to FIGs. 2A and 2B and FIGs. 3A and 3B.

The management device 130 is configured to provide various management functions within the communication system 100. For example, the management device 130 may be configured to provide various management functions for the communication network 120 (e.g., network provisioning functions, network monitoring functions, service provisioning functions, service monitoring functions, or the like, as well as various combinations thereof). For example, the management device 130 may be configured to provide various management functions for the customer premises 110 (e.g., provisioning functions for the optical network device 113, monitoring functions for the optical network device 113, provisioning functions for the customer premises equipments 111, monitoring functions for the customer premises equipments 111, customer care management functions for the customer premises 110, or the like, as well as various combinations thereof). It will be appreciated that the management device 130 may be configured to provide various other management functions within the communication system 100.

FIGs. 2A and 2B depict example embodiments of a self-reporting optical connector device, configured to support self-reporting of an optical fiber status of an optical fiber connected to the self-reporting optical connector device, where a receptacle cover of the self-reporting optical connector device is in an open state and a closed state, respectively.

As depicted in FIGs. 2A and 2B, an optical connector device 200 includes a housing 201, a receptacle 210 having a receptacle cover 211, a receptacle 220 having a receptacle cover 221, a controller 230, a photodetector 240, a status indicator element 250, and a communication element 260. It will be appreciated that the optical connector device 200 may support various other types of arrangements of the elements, may include various other elements, or the like, as well as various combinations thereof. As discussed further below, FIG. 2A depicts the optical connector device 200 when the optical connector device 200 is in a state configured to support propagation of optical signals between the communication network and an optical network device at the customer premises whereas FIG. 2B depicts the optical connector device 200 when the optical connector device 200 is in a state configured to support monitoring of the network-side optical fiber connected to the optical connector device 200.

As depicted in FIGs. 2A and 2B, with respect to the receptacle 210, the receptacle cover 211 is configured to support a closed state in which the receptacle cover 211 covers the receptacle 210 and an open state in which the receptacle 210 is able to receive an optical fiber connector 212 of a customer-side optical fiber 213 for connecting the customer-side optical fiber 213 to the optical connector device 200. The receptacle cover 211 may be configured to prefer the closed state, e.g., when the optical fiber connector 213 of the customer-side optical fiber 213 is removed from receptacle 210, the receptacle cover 211 automatically returns to the closed state (e.g., based on a spring or other mechanism for causing the receptacle cover 211 to remain in the closed state unless pressure is applied against the outside surface of the receptacle cover 211). It will be appreciated that, although a gap is illustrated between the outer edge of the optical fiber connector 212 and the inner surface of the receptacle 210 for purposes of illustrating that the receptacle 210 is an opening, the outer edge of the optical fiber connector 212 may contact the inner surface of the receptacle 210 when plugged into the receptacle 210.

As depicted in FIGs. 2A and 2B, with respect to the receptacle 220, the receptacle cover 221 is configured to support a closed state in which the receptacle cover 221 covers the receptacle 220 and an open state in which the receptacle 220 is able to receive an optical fiber connector 222 of a network-side optical fiber 223 for connecting the network-side optical fiber 223 to the optical connector device 200. The receptacle cover 221 may be configured to prefer the closed state, e.g., when the optical fiber connector 223 of the network-side optical fiber 223 is removed from receptacle 220, the receptacle cover 221 automatically returns to the closed state (e.g., based on a spring or other mechanism for causing the receptacle cover 221 to remain in the closed state unless pressure is applied against the outside surface of the receptacle cover 221). It will be appreciated that, although a gap is illustrated between the outer edge of the optical fiber connector 222 and the inner surface of the receptacle 220 for purposes of illustrating that the receptacle 220 is an opening, the outer edge of the optical fiber connector 222 may contact the inner surface of the receptacle 220 when plugged into the receptacle 220.

As depicted in FIGs. 2A and 2B, and indicated hereinabove, the optical connector device 200 includes elements configured to support self-reporting of the optical fiber status of the network-side optical fiber 223 when the optical connector device 200 is in a particular state (illustratively, and as indicated hereinabove, the controller 230, the photodetector 240, the status indicator element 250, and the communication element 260). It will be appreciated that the controller 230, the photodetector 240, the status indicator element 250, and the communication element 260 of FIGs. 2A and 2B may be configured to operate as the controller 141, the light sensing element 143, the communication element 144, and the local status indicator element 145 of FIG. 1, respectively. As further presented with respect to FIGs. 2A and 2B, the controller 230, the photodetector 240, the status indicator element 250, and the communication element 260 may cooperate to support self-reporting of the optical fiber status of the network-side optical fiber 223 when the optical connector device 200 is in a particular state (illustratively, when the customer-side optical fiber 213 is not connected to the receptacle 210 such that the receptacle cover 211 is closed).

As depicted in FIG. 2A, the optical connector 200 is configured to support a state in which an optical path of optical signals 290 which may be propagating on the network-side optical fiber 223 continues toward the receptacle 210 such that the optical signals 290 are directed from the network-side optical fiber 223 onto the customer-side optical fiber 213. As depicted in FIG. 2A, the receptacle 210 is in an open state and the optical fiber connector 212 of the customer-side optical fiber 213 is connected to the receptacle 210 such that the optical signals 290 propagating on the network-side optical fiber 223 continue toward, and are coupled into, the customer-side optical fiber 213 for further propagation toward customer premises equipments at the customer premises. In this state, determination and reporting of the optical fiber status of the network-side optical fiber 223 is not activated at the optical connector device 200 (i.e., the photodetector 240 is not activated to determine whether optical signals are detected and, thus, the controller 230 does not determine or report the optical fiber status of the network-side optical fiber 223).

As depicted in FIG. 2B, the optical connector 200 is configured to support a state in which an optical path of optical signals 290 which may be propagating on the network-side optical fiber 223 is redirected by the receptacle cover 211 toward the photodetector 240 for use in determining an optical fiber status of the network-side optical fiber 223. As depicted in FIG. 2B, the receptacle 210 is in a closed state such that an inner surface 215 of the receptacle cover 211 is arranged to redirect any optical signals 290 which may be propagating on the network-side optical fiber 223 toward the photodetector 240 for use in determining an optical fiber status of the network-side optical fiber 223. The controller 230 determines the optical fiber status of the network-side optical fiber 223 based on whether the photodetector 240 detects optical signals from the network-side optical fiber 223. The controller 230 may determine that the optical fiber status of the network-side optical fiber 223 is "inactive" based on a determination that the photodetector 240 does not detect optical signals or may determine that the optical fiber status of the network-side optical fiber 223 is "active" based on a determination that the photodetector 240 does detect optical signals. The controller 230 may then control notification of the optical fiber status of the network-side optical fiber 223 locally at the optical connector device 200 via the status indicator element 250 and/or remotely from the optical connector device 200 via transmission of one or more messages using the communication element 260.

It will be appreciated that the optical connector device 200 may be configured in various other ways for supporting self-reporting of an optical fiber status by the optical connector device 200.

FIGs. 3A and 3B depict an example embodiment of a self-reporting optical connector device for illustrating two views of the self-reporting optical connector device when a receptacle cover of the self-reporting optical connector device is in a closed state for supporting self-reporting of an optical fiber status of an optical fiber connected to the self-reporting optical connector device.

As depicted in FIGs. 3A and 3B, the optical connector 300 includes a housing 301 and a printed circuit board (PCB) 302. It will be appreciated that, although depicted as being separated for purposes of illustrating various elements of the optical connector 300, the PCB 302 may be integrated inside of or otherwise be connected to the housing 301. The optical connector 300 has a network-side optical fiber 320 connected thereto via an optical fiber connector 322 at the end of the network-side optical fiber 320 (illustratively, the housing 301 includes a first receptacle (not explicitly indicated) having the optical fiber connector 322 inserted therein). The optical connector 300 does not have a customer-side optical fiber connected thereto (illustratively, the housing 301 includes a second receptacle (not explicitly indicated) which is covered by a receptacle cover 321 which is in the closed position such that the associated receptacle is blocked and light from the network-side optical fiber 320 is contained within the housing 301). The receptacle cover 321 may be configured to automatically return to the closed state when a customer-side optical fiber is not connected thereto. The PCB 302 includes a controller 330 (e.g., which may operate similar to the controller 141 and the controller 230), a photodetector 340 (e.g., which may be used to implement light sensing element 143 and operate similar to photodetector 240), and a communication element 360 (e.g., which may operate similar to the communication element 144 and the communication element 260).

As depicted in FIGs. 3A and 3B, the optical connector 300 is illustrated from two different perspectives. As illustrated in FIG. 3A, light 390 propagating over the network-side optical fiber 320 exits the network-side optical fiber 320 inside of the housing 301. The receptacle cover 321 being in the closed state ensures that the light 390 remains within the housing 390, thereby preventing injury to the eyes of a customer at the customer premises. As illustrated in FIG. 3B, the inside surface of the receptacle cover 321 includes a mirror 315 which redirects the light 390 that exits the network-side optical fiber 320 to the photodetector 340. The controller 330 is configured to determine an optical fiber status of the network-side optical fiber 320 based on whether light 390 is detected by the photodetector 340, e.g., an optical fiber status of "active" (or other suitable type of status) where light 390 is detected by the photodetector 340 during the status check operation by the controller 330 or an optical fiber status of "inactive" where light 390 is not detected by the photodetector 340 during the status check operation by the controller 330. The controller 330 may then trigger notification of the determined optical fiber status of the network-side optical fiber 320 (e.g., locally and/or remotely based on sending of one or more messages via the communication element 360 and/or using one or more other local indicators which have been omitted for purposes of clarity).

It will be appreciated that the optical connector 300 may be configured in various other ways for supporting self-reporting of an optical fiber status by the optical connector 300.

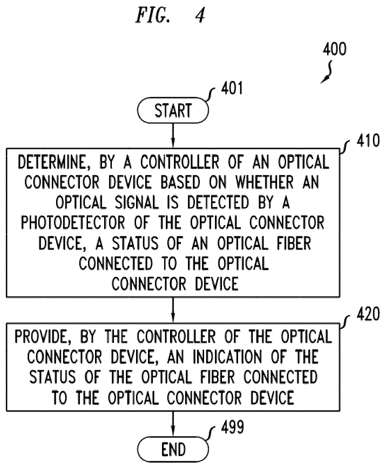

FIG. 4 depicts an example embodiment of a method for operating a self-reporting optical connector device for self-reporting of an optical fiber status related to the self-reporting optical connector device. It will be appreciated that, although primarily presented herein as being performed serially, at least a portion of the functions of method 400 may be performed contemporaneously or in a different order than as presented in FIG. 4. At block 401, the method 400 begins. At block 410, determine, by a controller of an optical connector device based on whether an optical signal is detected by a photodetector of the optical connector device, a status of an optical fiber connected to a fiber receptacle of the optical connector device. At block 420, provide, by the controller of the optical connector device, an indication of the status of the optical fiber connected to the fiber receptacle of the optical connector device. At block 499, the method 400 ends. It will be appreciated that various other functions presented herein as being supported by the optical connector device may be implemented within the context of the method 400 of FIG. 4.

It will be appreciated that, although primarily presented with respect to example embodiments in which the optical connector device supports self-reporting of the optical fiber status of the network-side optical fiber connected to the optical connector device based on whether a customer-side optical fiber is connected to the optical connector device, in at least some example embodiments the optical connector device may be configured to support self-reporting of the optical fiber status of the network-side optical fiber connected to the optical connector device independent of whether the customer-side optical fiber is connected to the optical connector device. For example, when the customer-side optical fiber is connected to the optical connector device, the optical connector device may be configured to support both pass-through of the optical signals propagating on the network-side optical fiber for coupling the optical signals to the customer-side optical fiber and redirection of at least a portion of the optical signals propagating on the network-side optical fiber toward a light sensing element for supporting determination and reporting of the optical fiber status of the network-side optical fiber even when the customer-side optical fiber is connected to the optical connector device. It will be appreciated that this may enable self-reporting of the reporting of the optical fiber status of the network-side optical fiber connected to the optical connector device under various conditions, such as periodically (e.g., once per day, once per week, once per month, or the like), in response to a condition detected at the optical connector device, in response to a remotely initiated request received by the optical connector device (e.g., received from a management system, a customer care system, or the like), or the like, as well as various combinations thereof. It will be appreciated that the optical connector device may be configured to support self-reporting of the optical fiber status of the network-side optical fiber connected to the optical connector device under various other conditions.

Various example embodiments a self-reporting optical connector device may provide various advantages or potential advantages. For example, various example embodiments for a self-reporting optical connector device may be configured to support self-reporting of an optical fiber status of an optical fiber at a customer premises, thereby eliminating situations in which an unknown fiber disruption in or at the customer premises would cause failure of a self-install by the customer at the customer premises (e.g., thereby eliminating the "cold house" problem). For example, various example embodiments for a self-reporting optical connector device may obviate the need for use of service assurance solutions that are based on remote (i.e., not at the customer premises) testing of fiber connectivity using expensive optical troubleshooting techniques (e.g., optical reflectometry techniques such as optical time domain reflectometry (OTDR), optical frequency domain reflectometry (OFDR), or the like) that are generally applied for troubleshooting purposes and not for active testing of PON termination points and that generally lack visibility into validating service availability at the fiber termination jack while only providing validation of the PON segment (although it will be appreciated that various such optical troubleshooting techniques may be used in combination with various example embodiments of the self-reporting optical connector device). For example, various example embodiments for a self-reporting optical connector device may be configured to enable integration of fiber status reporting into communication service provider mobile applications and self-installation workflows, thereby allowing the communication service provider to accurately pre-quality customer premises for self-installs so as to reduce or even completely eliminating any risk of install failures due to fiber connectivity issues at the customer premises, and, thus, significantly improve communication service provider workflows and customer satisfaction at a fraction of the price of traditional service assurance methods. Various example embodiments for a self-reporting optical connector device may provide various other advantages or potential advantages.

It will be appreciated that various references herein to the "optical connector device" alternatively may be referred to as a "fiber jack" or a "fiber termination receptacle" (or other terms suitable for describing the device which optically couples the network-side optical fiber the optical fiber at the customer premises).

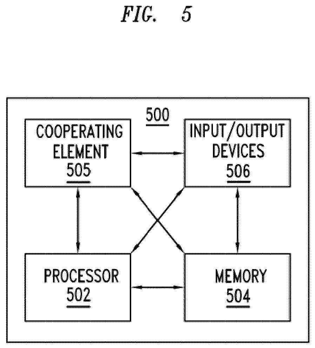

FIG. 5 depicts an example embodiment of a computer suitable for use in performing various functions presented herein.

The computer 500 includes a processor 502 (e.g., a central processing unit (CPU), a processor, a processor having a set of processor cores, a processor core of a processor, or the like) and a memory 504 (e.g., a random access memory (RAM), a read-only memory (ROM), or the like). In at least some example embodiments, the computer 500 may include at least one processor and at least one memory storing instructions that, when executed by the at least one processor, cause the computer to perform various functions presented herein.

The computer 500 also may include a cooperating element 505. The cooperating element 505 may be a hardware device. The cooperating element 505 may be a process that can be loaded into the memory 504 and executed by the processor 502 to implement various functions presented herein (in which case, for example, the cooperating element 405 (including associated data structures) can be stored on a non-transitory computer readable medium, such as a storage device or other suitable type of storage element (e.g., a magnetic drive, an optical drive, or the like)).

The computer 500 also may include one or more input/output devices 506. The input/output devices 506 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 500 may represent a general architecture and functionality suitable for implementing functional elements described herein, portions of functional elements described herein, or the like, as well as various combinations thereof. For example, computer 400 may provide a general architecture and functionality that is suitable for implementing one or more elements presented herein. For example, computer 500 may provide a general architecture and functionality that is suitable for implementing one or more of a customer premises equipment 111 or a portion thereof, an optical network device 113 or a portion thereof, an optical connector device 115 or a portion thereof (e.g., a controller 141), an optical network device 121 or a portion thereof, a management device 130 or a portion thereof, an optical connector device 200 or a portion thereof, a controller 230 or a portion thereof, a photodetector 240 or a portion thereof, a status indicator element 250 or a portion thereof, a communication element 260 or a portion thereof, an optical connector 300 or a portion thereof, a controller 330 or a portion thereof, a photodetector 360 or a portion thereof, a communication element 360 or a portion thereof, and so forth.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM). It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements. It will be appreciated that, as used herein, the term "or" refers to a non-exclusive "or" unless otherwise indicated (e.g., use of "or else" or "or in the alternative"). It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
a first fiber receptacle configured to receive a first connector of a first optical fiber;
a photodetector configured to detect optical signals;
a second fiber receptacle;
a receptacle cover configured to cover the second fiber receptacle, wherein the receptacle cover is configured to support an open state in which the second fiber receptacle is configured to receive a second connector of a second optical fiber for transferring optical signals between the first optical fiber and the second optical fiber, wherein the receptacle cover is configured to support a closed state in which optical signals received over the first optical fiber are redirected toward the photodetector; and
a controller configured to:
determine, based on whether an optical signal is detected by the photodetector, a status of the first optical fiber; and
provide an indication of the status of the first optical fiber.

2. The apparatus according to claim 1, wherein an inside surface of the receptacle cover includes a reflective element for redirecting the optical signals received over the first optical fiber toward the photodetector.

3. The apparatus according to any of claims 1 to 2, wherein the photodetector is configured to detect optical signals in a range of wavelengths configured to support a fiber-to-the-home service.

4. The apparatus according to any of claims 1 to 3, wherein the photodetector is integrated with the controller.

5. The apparatus according to any of claims 1 to 4, wherein the controller is configured to determine the status of the optical fiber and provide the indication of the status of the optical fiber periodically.

6. The apparatus according to any of claims 1 to 5, wherein, to provide the indication of the status of the first optical fiber, the controller is configured to initiate activation of a visual indicator.

7. The apparatus according to any of claims 1 to 6, wherein, to provide the indication of the status of the first optical fiber, the controller is configured to initiate sending of a message toward a remote device.

8. The apparatus according to claim 7, wherein the message is sent wirelessly.

9. The apparatus according to any of claims 1 to 8, further comprising:
a wireless chip configured to support wireless communication of the indication of the status of the first optical fiber.

10. The apparatus according to any of claims 1 to 9, further comprising:
a battery configured to power at least the controller.

11. The apparatus according to claim 10, wherein the controller is configured to:
determine a status of the battery; and
provide an indication of the status of the battery.

12. The apparatus according to claim 11, wherein, to provide the indication of the status of the battery, the controller is configured to at least one of initiate activation of a visual indicator or initiate sending of a message toward a remote device.

13. The apparatus according to any of claims 1 to 12, wherein the first optical fiber is part of a passive optical network, wherein the second optical fiber is a fiber located at a customer premises.

14. An apparatus, comprising:
a fiber receptacle having a receptacle cover, a photodetector configured to detect optical signals, and a controller;
wherein the receptacle cover is configured to redirect optical signals received over an optical fiber to the photodetector;
wherein the controller is configured to provide an indication of a status of the optical fiber based on whether an optical signal is detected by the photodetector.

15. A method, comprising:
determining, by a controller of an optical connector based on whether an optical signal is detected by a photodetector of the optical connector, a status of an optical fiber connected to the optical connector; and
providing, by the controller of the optical connector, an indication of the status of the optical fiber connected to the optical connector.
